# EUROPEAN PATENT APPLICATION

(11) **EP 3 200 163 A1**
(43) Date of publication of application: **02.08.2017**
(21) Application number: 17153074.4
(22) Date of filing: 25.01.2017
(51) Int. Cl.: G07D 9/00, B65G 11/00, G07F 1/00

(54) **COIN DEPOSITING DEVICE**

(30) Priority: 29.01.2016 JP 2016016010
(71) Applicant: Toshiba TEC Kabushiki Kaisha, Tokyo 141-0032 (JP)
(72) Inventor: WATANABE, Osamu, Shinagawa-ku, Tokyo 141-8562 (JP); HARAGUCHI, Takeshi, Shinagawa-ku, Tokyo 141-8562 (JP)
(74) Representative: Takeuchi, Maya

(57) **Abstract**

A coin depositing device comprises a coin depositing port including a funnel-shaped inclined surface and a hole, arranged at the lowermost part of the inclined surface, through which a coin slid down along the inclined surface is deposited, and a money placing section including a money placing surface connecting with an upper end of a part of the inclined surface and a guide wall arranged at an edge part of the money placing surface, wherein the inclined surface includes a first inclined surface connecting with the money placing surface and a second inclined surface facing the first inclined surface across the hole, and a lower end of the first inclined surface is located at the bottom side of the hole farther than a lower end of the second inclined surface.

## Description

### FIELD

The present invention relates to the field of self-checkout technologies in general, and embodiments described herein relate in particular to a coin depositing device and the corresponding system.

### BACKGROUND

In a POS (Point Of Sales) terminal used in a supermarket and the like, an area for temporarily placing money received from a customer and confirming the money before the money is put into a drawer is arranged therein. Such an area is referred to as a checking tray or a money inspection tray. Conventionally, a configuration is proposed which is capable of manually depositing a coin from the checking tray to a coin reception port by continuously linearly arranging the checking tray and the coin reception port.

Further, in recent years, in the supermarket, a self-checkout apparatus capable of carrying out a settlement processing by a customer himself/herself is used. In such a self-checkout apparatus, there is a funnel-shaped coin depositing port capable of receiving a plurality of coins at a time so that the customer can complete a depositing operation of the coins once.

Incidentally, among customers who use the self-checkout apparatus, there is a customer who once puts coins in the wallet onto the self-checkout apparatus to confirm the coins and then deposits the coins to the coin depositing port. In the case of such a usage described above, the customer picks up the coins put on the self-checkout apparatus again to deposit the coins to the coin depositing port. Thus, though it is considered that a checking tray with a conventional configuration is arranged in the self-checkout apparatus, since the structure of the coin depositing port is different as described above, it is difficult to adopt the checking tray without any changes. Further, in the self-checkout apparatus, there are many customers unfamiliar with operations, and thus a technology capable of easily carrying out the depositing of the coins is desired.

To achieve this end, there is provided a coin depositing device, comprising:
a coin depositing port including a funnel-shaped inclined surface and a hole, arranged at the lowermost part of the inclined surface, through which a coin slid down along the inclined surface is deposited; and
a money placing section including a money placing surface connecting with an upper end of a part of the inclined surface and a guide wall arranged at an edge part of the money placing surface, wherein
the inclined surface includes a first inclined surface connecting with the money placing surface and a second inclined surface facing the first inclined surface across the hole, and a lower end of the first inclined surface is located at the bottom side of the hole farther than a lower end of the second inclined surface.

Preferably, the money placing surface includes a dust drop hole on the surface thereof.

Preferably still, the coin depositing device further includes:
a dust reception section arranged at the rear side of the money placing surface to receive dust dropping from the dust drop hole.

Preferably yet, the money placing surface includes thereon a sheet of a low friction material affixed on an area other than the area at which the dust drop hole is arranged.

Suitably, a corner portion for connecting the money placing surface and the guide wall is formed in a curved shape.

The invention also relates to a coin depositing system, comprising:
a coin depositing port means including a funnel-shaped inclined surface and a hole, arranged at the lowermost part of the inclined surface, through which a coin slid down along the inclined surface is deposited; and
a money placing means including a money placing surface connecting with an upper end of a part of the inclined surface and a guide wall arranged at an edge part of the money placing surface, wherein
the inclined surface includes a first inclined surface connecting with the money placing surface and a second inclined surface facing the first inclined surface across the hole, and a lower end of the first inclined surface is located at the bottom side of the hole farther than a lower end of the second inclined surface.

Preferably, the money placing surface includes a dust drop hole on the surface thereof.

Preferably still, the coin depositing system further includes:
a dust reception means arranged at the rear side of the money placing surface to receive dust dropping from the dust drop hole.

Preferably yet, the money placing surface includes thereon a sheet of a low friction material affixed on an area other than the area at which the dust drop hole is arranged.

Preferably further, a corner portion for connecting the money placing surface and the guide wall is formed in a curved shape.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a front view illustrating the appearance of a self-checkout apparatus according to a present embodiment;
Fig. 2 is a perspective view illustrating the appearance of a settlement terminal in a state in which a door thereof is opened;
Fig. 3 is a perspective view illustrating the appearance of the self-checkout apparatus viewed from upside;
Fig. 4 is a plan view illustrating the appearance in the vicinity of a coin depositing port;
Fig. 5 is a diagram schematically illustrating a cross section taken along an A-A line shown in Fig. 4; and
Fig. 6 is an enlarged view of the cross section of the coin depositing port shown in Fig. 5.

### DETAILED DESCRIPTION

In accordance with an embodiment, a coin depositing device comprises a coin depositing port including a funnel-shaped inclined surface and a hole, arranged at the lowermost part of the inclined surface, through which a coin slid down along the inclined surface is deposited, and a money placing section including a money placing surface connecting with an upper end of a part of the inclined surface and a guide wall arranged at an edge part of the money placing surface, wherein the inclined surface includes a first inclined surface connecting with the money placing surface and a second inclined surface facing the first inclined surface across the hole, and a lower end of the first inclined surface is located at the bottom side of the hole farther than a lower end of the second inclined surface.

Hereinafter, an embodiment of a coin depositing device is described in detail with reference to the accompanying drawings. The present embodiment describes an example of applying the invention to a settlement terminal of a self-checkout apparatus used by a customer as the coin depositing device to carry out a commodity registration processing and a settlement processing by himself/herself.

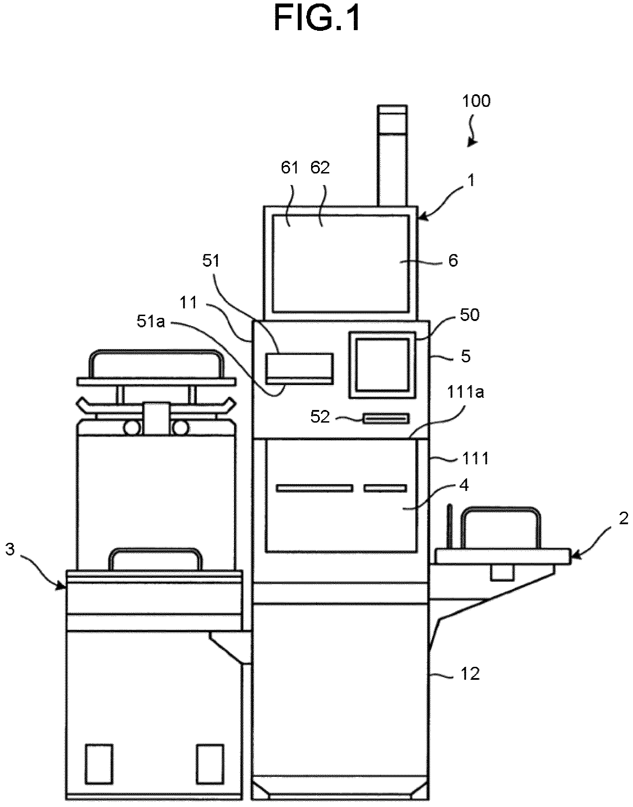

Fig. 1 is a front view illustrating the appearance of a self-checkout apparatus 100 according to the present embodiment. As shown in Fig. 1, the self-checkout apparatus 100 is provided with a settlement terminal 1, a basket placing shelf 2 and a bagging shelf 3. The settlement terminal 1 is provided with a money depositing/dispensing section 4, a reading section 5 and a display and operation section 6. The settlement terminal 1 is further provided with a control section (not shown) for controlling each section thereof.

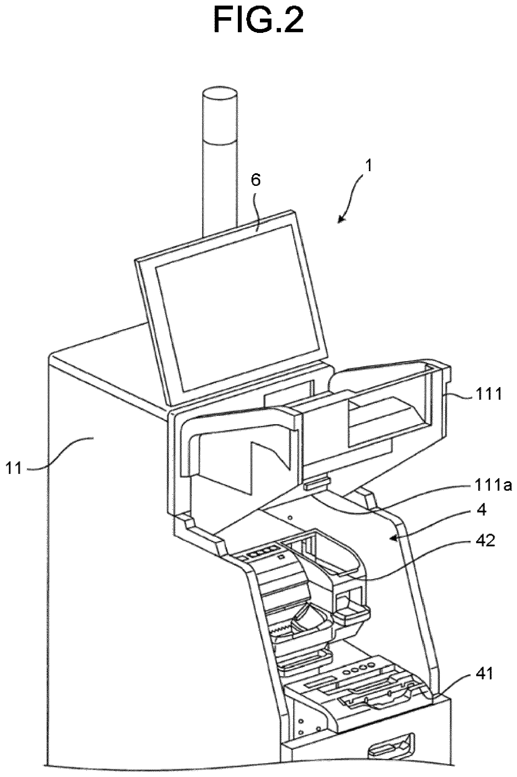

The settlement terminal 1 is provided with a first housing 11 and a second housing 12. The first housing 11 has an open/close door 111. The door 111 rotates in the vertical direction around a hinge section 111a. The first housing 11 houses a bill change machine (bill depositing/dispensing device) 41 and a coil change machine (coin depositing/dispensing device) 42 (both refer to Fig. 2) constituting the money depositing/dispensing section 4. The second housing 12 houses the control section (not shown).

The reading section 5 is equipped with a scanner 50 for reading the appearance of a commodity and a symbol (barcode and the like) attached to the commodity to specify the commodity. Further, the reading section 5 is equipped with a printer 51 for printing a receipt. The printer 51 has a receipt discharge table 51 a, protruding from the first housing 11, for supporting a discharged receipt. The receipt discharge table 51a is formed in a convex-shape. Furthermore, the reading section 5 is equipped with a card reader 52 for reading a credit card and the like.

The display and operation section 6 is provided with a monitor 61 and a touch panel 62. The monitor 61 displays an image according to control of the control section (not shown). The touch panel 62 is arranged on the surface of the monitor 61 to output information of a position thereon touched by an operator to the control section (not shown).

The basket placing shelf 2 is an article placing table serving as a place on which a basket is placed at the time operations of taking out a commodity in the basket and holding the commodity over the reading section 5 are carried out. The basket placing shelf 2 is arranged at one of the sides of the settlement terminal 1.

The bagging shelf 3 is a table for bagging the scanned commodity. The bagging shelf 3 is arranged at the other side of the settlement terminal 1 (the opposite side of the basket placing shelf 2).

Fig. 2 is a perspective view illustrating the appearance of the settlement terminal 1 in a state in which the door 111 thereof is opened. As shown in Fig. 2, the door 111 rotates upwards to open the inside of the first housing 11 to expose the bill change machine 41 and the coil change machine 42. The bill change machine 41 and the coil change machine 42 are housed in the first housing 11 in an overlapping or stacking manner, and the bill change machine 41 is located below the coil change machine 42.

The bill change machine 41 determines an authenticity (true or false) of acquired bills to store them as specie and dispenses bills as change. The coil change machine 42 determines an authenticity (true or false) of acquired coins to store them as specie and dispenses coins as change. The bill change machine 41 and the coil change machine 42 notify the control section (not shown) of the amount of the stored money. Further, the bill change machine 41 and the coil change machine 42 receive notification of amount to be dispensed as change from the control section (not shown).

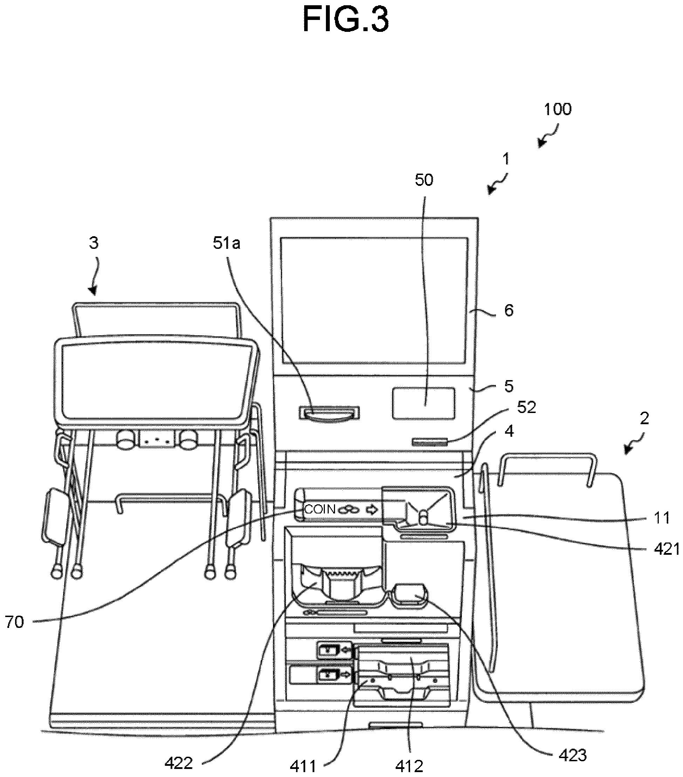

Fig. 3 is a perspective view illustrating the appearance of the self-checkout apparatus 100 viewed from upside. As shown in Fig. 3, a depositing port of coins (coin depositing port) 421 for depositing a coin to the coil change machine 42 and a money placing section 70 are arranged in parallel on the upper surface of the first housing 11. In Fig. 3, it is exemplified that the coin depositing port 421 and the money placing section 70 are arranged in parallel from left to right of the settlement terminal 1; however, the order and the direction of the arrangement are not limited to these arrangement.

Further, in the first housing 11 (money depositing/dispensing section 4), a stage (surface) including a coin discharge dish 422 and a reject dish 423 and a stage including a bill depositing port 411 and a bill discharge port 412 are arranged in a stepwise manner in order from the back side at which the coin depositing port 421 and the money placing section 70 are arranged toward the front side. In other words, the coin depositing port 421 and the money placing section 70 are arranged at the upper stage, the coin discharge dish 422 and the reject dish 423 are arranged at the middle stage, and the bill depositing port 411 and the bill discharge port 412 are arranged at the lower stage. In this manner, by arranging various kinds of depositing ports and discharge ports (discharge dishes) in a stepwise manner, all the depositing ports and the discharge ports (discharge dishes) can be seen from the back side to the front side.

The coin discharge dish 422 is a reception dish for receiving a coin discharged from the coil change machine 42. The reject dish 423 is a reception dish for receiving a coin (reject coin) such as a deformed coin, a foreign coin and a counterfeit coin not to be housed in the coil change machine 42. A positional relationship of the coin depositing port 421, the coin discharge dish 422 and the reject dish 423 depends on the structure of the coil change machine 42.

As shown in Fig. 3, the coin discharge dish 422 is arranged at the end part opposite to the end part of the width direction of the settlement terminal 1 at which the coin depositing port 421 is arranged. In this manner, locations of the coin depositing port 421 and the coin discharge dish 422 are shifted from each other in the height direction, the width direction and the depth direction, and thus visibility and operability for the coin discharge dish 422 are increased. Furthermore, the reject dish 423 is arranged at the lower position of the coin depositing port 421 in parallel with the coin discharge dish 422.

The bill depositing port 411 receives bills to be deposited to the bill change machine 41. The bill discharge port 412 dispenses bills from the bill change machine 41. A position-relationship between the bill depositing port 411 and the bill discharge port 412 depends on the structure of the bill change machine 41.

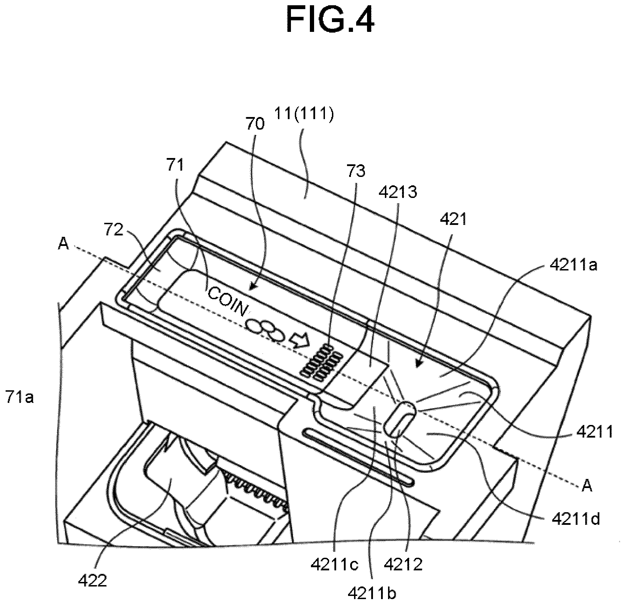

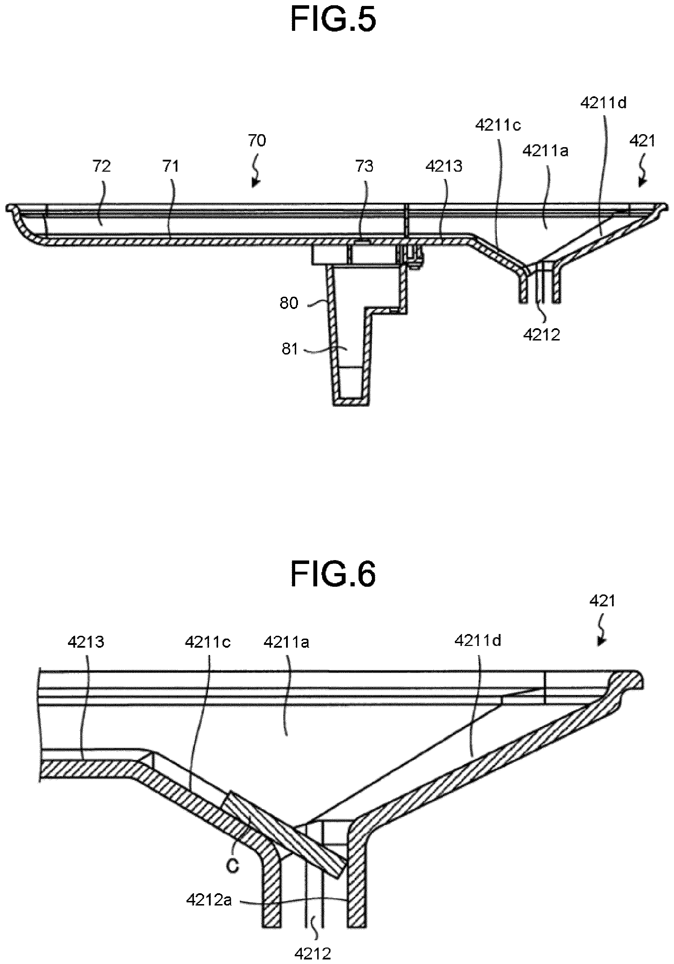

Next, with reference to Fig. 4∼Fig. 6, the arrangements in the vicinity of the coin depositing port 421 and the money placing section 70 are described. Fig. 4 is a plan view illustrating the appearance in the vicinity of the coin depositing port 421. Fig. 5 is a diagram schematically illustrating a cross section taken along an A-A line shown in Fig. 4. Fig. 6 is an enlarged view of the cross section of the coin depositing port 421 shown in Fig. 5.

As shown in Fig. 4, the first housing 11 (door 111) is provided with the coin depositing port 421 and the money placing section 70 continuously arranged at a position parallel to the coin depositing port 421 in the width direction of the settlement terminal 1.

The money placing section 70 is generally referred to as a checking tray or a money inspection tray. The customer takes out money from his or her wallet to put the money on the money placing section 70 and visually confirms the money used for payment at the time of the settlement processing of the settlement terminal 1.

The money placing section 70 is a recess concaved from the surface of the first housing 11. More specifically, the money placing section 70 includes a plane-shaped money placing surface 71 for forming a bottom portion of the concaved recess and a guide wall 72 for forming a wall portion of the concaved recess. The money placing surface 71 is not limited to the plane shape, but may be curved into a concave shape.

The money placing surface 71 is a surface for placing money (coins and bills). A dust drop hole 73 is arranged on the surface of the money placing surface 71. The dust drop hole 73 is constituted by arranging a plurality of holes in a zigzag shape or a lattice shape such as slits the diameter of each of which is smaller than the thickness of the coin. For example, the dust drop hole 73 is arranged in the vicinity of the connecting part with the coin depositing port 421 on the money placing surface 71 as shown in Fig. 4. The dust drop hole 73 drops dust sticking to the coin from gaps of the plurality of the holes.

A dust reception section 80 (refer to Fig. 5) for receiving dust dropped from the dust drop hole is arranged at a position corresponding to the dust drop hole 73 at the back side of the money placing surface 71. The dust reception section 80 includes an opening (not shown) at the back side of the money placing surface 71, to receive dust passing through the dust drop hole 73 in a storage section 81. Further, the dust reception section 80 is detachable from the first housing 11 (money placing surface 71).

Further, in Fig. 4, the dust drop hole 73 is arranged in the vicinity of the connecting part with the coin depositing port 421; however, the arrangement position of the dust drop hole 73 is not limited to this arrangement. Furthermore, in Fig. 4, the dust drop hole 73 is arranged on a part of the money placing surface 71; however, the arrangement position of the dust drop hole 73 is not limited to this position, for example, the dust drop hole 73 may be arranged on the whole surface of the money placing surface 71 or on a plurality of parts of the money placing surface 71.

The money placing surface 71 has a sheet 71a coated with a low friction material such as a fluorine resin fixed thereon. More specifically, the sheet 71a is pasted on an area other than the area where the dust drop hole 73 is formed on the surface of the money placing surface 71. The sheet 71a makes it easy for the coin placed on the money placing surface 71 to be slid toward the coin depositing port 421. Further, the sheet 71a prevents that the money placing surface 71 is stained or damaged by the placed coin. As shown in Fig. 4, characters or illustration for describing the use state of the money placing section 70 may be indicated on the sheet 71a.

The guide wall 72 is arranged at an edge part of the money placing surface 71. More specifically, the guide wall 72 is arranged at an edge part other than the connecting part with the coin depositing port 421 (inclined surface 4211) at the money placing surface 71. The guide wall 72 stands upward from the money placing surface 71 to support the side of money (particularly, coin) placed on the money placing surface 71. The guide wall 72 includes a slant vertical to the money placing surface 71 or downward towards the money placing surface 71. The height of the guide wall 72, i.e., the depth of the concave-shaped part of the money placing section 70, is a value greater than the thickness of the coin, for example, 15 mm. The depth of the concave-shaped part of the money placing section 70 is set to a depth at which collision with the receipt discharge table 51a of the printer 51 can be avoided in a state in which the inside of the first housing 11 is opened.

The lower part of the guide wall 72 is formed in such a manner that it is smoothly connected with the money placing surface 71. More specifically, a corner portion for connecting the money placing surface 71 with the guide wall 72 is formed into a curved shape for smoothly connecting the money placing surface 71 with the guide wall 72. Thus, coin can smoothly be slid along the guide wall 72 from the money placing surface 71 through the curved shape wall, and thus easiness at the time the coin is taken out from the money placing section 70 can be realized. The radius of curvature of the corner portion is not limited in particular, but may be, for example, 10 R.

In the example in Fig. 4, the whole of the corner portion for connecting the money placing surface 71 with the guide wall 72 is formed in the curved shape; however, the present invention is not limited to this form, but only a part of the corner portion may be formed in the curved shape. For example, the corner portion at the front side at which coin is taken out by a user may be formed in the curved shape. Further, a corner portion for connecting the first housing 11 with the upper part of the guide wall 72 may be formed in the curved shape similar to the above, or may be an arrangement for connecting the first housing 11 with the upper part of the guide wall 72 in a planar manner (linearly).

As stated above, the money placing section 70 formed on the door 111 of the first housing 11 in the concaved shape is arranged at a position at which the money placing section 70 interrupts the receipt discharge table 51a of the printer 51 in a state in which the door 111 is rotated upwards to open the inside of the first housing 11.

As shown in Fig. 4, the first housing 11 is formed in a setback to the back side of the first housing 11 in the vicinity of the money placing section 70. In other words, a distance between the guide wall 72 at the front side thereof and the wall of the first housing 11 facing the guide wall 72 at the money placing section 70 is shorter if compared with a distance therebetween at the coin depositing port 421. With this arrangement, the coin discharge dish 422 positioned at the lower part of the money placing section 70 can be easily viewed by the customer. In a state of touching an edge of the first housing 11 with a thumb, coin can be pinched and taken out from the money placing section 70, and thus, operability at the time of taking out coin from the money placing section 70 can be improved.

On the other hand, the coin depositing port 421 includes a funnel-shaped inclined surface 4211 extending downward from the outside to the inside and a hole 4212 arranged at the lowermost part of the inclined surface 4211. The coin depositing port 421 further includes a plane-shaped connection section 4213 extending from the inclined surface 4211 at a position at which it connects with the money placing surface 71. Further, in a state in which the money placing surface 71 is curved into the concave shape, it is needless to say that the connection section 4213 is molded in accordance with the corresponding shape.

The hole 4212 has such a size as to pass one or more coins. In other words, the size of the hole 4212 in the longitudinal direction is larger than a diameter of a coin with a largest diameter, and the size in the width direction orthogonal to the longitudinal direction is larger than a thickness of the thickest coin. Further, it is more preferable that the size of the hole 4212 is such a degree as to pass the plurality of the overlapped coins. In other words, it is more preferable that the size of the hole 4212 in the width direction is larger by twice or more than the thickness of the thickest coin.

The hole 4212 is a long hole and vertically long when viewed by the customer who stands in front of the settlement terminal 1. In other words, the longitudinal direction of the hole 4212 is consistent with a direction (front-back direction of the settlement terminal 1) orthogonal to the parallel arrangement direction of the money placing section 70 and the coin depositing port 421. By arranging the hole 4212 as described above, it is possible that the coin depositing port 421 efficiently receives coin deposited from the money placing surface 71.

The inclined surface 4211 is a guide member for enabling coin to slide down to the hole 4212. In the coin depositing port 421 of the present embodiment, as to a pair of portions sandwiching the hole 4212 of the inclined surface 4211, positions thereof contacting with the hole 4212 are different, which is described as follows.

The inclined surface 4211 includes a pair of inclined surfaces 4211a and 4211b for sandwiching the hole 4212 at front and back sides and a pair of inclined surfaces 4211c and 4211d for sandwiching the hole 4212 at left and right sides. The inclined surface 4211c corresponds to a first inclined surface. The upper end of the inclined surface 4211c is connected with the connection section 4213 (money placing surface 71), and the lower end of the inclined surface 4211c comes in contact with the long side of the hole 4212. Furthermore, the inclined surface 4211d corresponds to a second inclined surface. The inclined surface 4211d faces the inclined surface 4211c across the hole 4212, and the lower end thereof comes in contact with the long side of the hole 4212. The upper ends of the inclined surfaces 4211 a, 4211b and 4211d are the same as the guide wall 72 in height.

In the inclined surfaces 4211c and 4211 d, a position at which the lower end of the inclined surface 4211c comes in contact with the hole 4212 is lower than a position at which the lower end of the inclined surface 4211d comes in contact with the hole 4212 (refer to Fig. 5 and Fig. 6). In other words, the lower end of the inclined surface 4211c is located at the bottom side of the hole 4212 farther than the lower end of the inclined surface 4211d. A difference between the height of the inclined surface 4211c and the height of the inclined surface 4211d with respect to the hole 4212 is, for example, about 7∼8 mm.

Behaviors of a coin within the foregoing coin depositing port 421 are described. Firstly, an arrangement different from that of the coin depositing port 421 of the present embodiment is described.

For example, as an example of the arrangement (hereinafter, referred to as a conventional arrangement) different from the coin depositing port 421 of the present embodiment, it is assumed that the lower end of the inclined surface 4211c is formed with a height identical to that of the lower end of the inclined surface 4211d with respect to the hole 4212. In the conventional arrangement, if a coin is deposited from the money placing surface 71, the coin slides down along the inclined surface 4211c. At this time, as the heights of the lower ends of the inclined surface 4211c and the inclined surface 4211d are equal, there is a possibility that the coin runs onto the inclined surface 4211d due to its momentum. Further, if the plurality of the coins is continuously deposited from the money placing surface 71, the coins which run onto the inclined surface 4211d block the hole 4212, and thus prevent other coins from dropping into the hole 4212. In this manner, in the conventional arrangement, there is a case in which coins cannot be smoothly deposited from the money placing surface 71 to the coin depositing port 421 (hole 4212).

On the other hand, in the coin depositing port 421 of the present embodiment, as shown in Fig. 6, the lower end of the inclined surface 4211c with respect to the hole 4212 is lower than the lower end of the inclined surface 4211d. Thus, a coin C sliding down along the inclined surface 4211c abuts against an inner wall 4212a of the hole 4212 located at the lower part of the inclined surface 4211d. Then, the coin C stops sliding down due to abutment against the inner wall 4212a, and drops into the hole 4212. In this manner, in the coin depositing port 421 of the present embodiment, smoothly depositing the coin from the money placing surface 71 to the coin depositing port 421 (hole 4212) can be realized.

Slopes of the inclined surface 4211c and the inclined surface 4211d may be equal to or different from each other. Slopes of the inclined surface 4211 a and the inclined surface 4211b may be equal to or different from those of the inclined surface 4211c and the inclined surface 4211d. For example, the inclined surface 4211c and the inclined surface 4211d may be vertical planes.

The settlement terminal 1 is provided with a sensor (not shown) for detecting an article (wallet or coin) arranged on the money placing surface 71 or in the vicinity of the money placing surface 71. An optical sensor, a magnetic sensor, an image sensor and the like are exemplified as a sensor. The optical sensor, for example, is arranged in such a manner that the optical axis thereof extends along the money placing surface 71, and determines that there is an article on the money placing surface 71 if the optical axis is interrupted or blocked. The magnetic sensor, for example, is arranged at the back side of the money placing surface 71, and determines that there is an article on the money placing surface 71 if a metal is detected. The image sensor, for example, is arranged above the money placing surface 71, and determines that there is an article on the money placing surface 71 through an image recognition. The control section (not shown) carries out a processing for informing money which remains on the money placing surface 71 on the basis of a determination result of the sensor.

According to the foregoing arrangement, in the first housing 11 (money depositing/dispensing section 4), it is possible to deposit coin from the money placing section 70 to the coin depositing port 421. Specifically, the customer takes out money (coins and bills) for payment from his or her wallet and puts the money on the money placing surface 71 of the money placing section 70 to confirm the money at the time of the settlement processing of settlement terminal 1. Next, the customer slides the coin on the money placing surface 71 to the coin depositing port 421. At this time, the guide wall 72 of the money placing section 70 supports the side of the coin to prevent the coin from dropping from the money placing surface 71. Further, the dust drop hole 73 of the money placing section 70 drops dust and foreign matter sticking to or adhered on the coin to the dust reception section 80 to prevent dust and foreign matter on the coin from entering into the coin depositing port 421.

As shown in Fig. 6, the coin C conveyed to the coin depositing port 421 slides down along the inclined surface 4211c. At this time, the inclined surfaces 4211c and 4211d promote depositing of the coin into the first housing 11 (hole 4212) by contacting the coin C against the inner wall 4212a of the hole 4212 through the difference in height with respect to the hole 4212.

In a case in which coin is taken out from the money placing section 70, the customer slides the coin along the guide wall 72 from the money placing surface 71 to take out the coin. At this time, the money placing surface 71 and the guide wall 72 realize easiness of operation at the time of taking out the coin through the shape (curved shape) of the corner portion connecting the two members.

As described above, according to the present embodiment, as the coin can be smoothly deposited from the money placing surface 71 to the coin depositing port 421 (hole 4212), depositing of the coin can be easily carried out. Further, even if the coin is taken out from the money placing surface 71, the coin can be easily taken out from the money placing surface 71 by sliding the coin along the guide wall 72 from the money placing surface 71.

In the present embodiment, an example in which the settlement terminal 1 of the self-checkout apparatus 100 for carrying out the commodity registration processing and the settlement processing by the customer is applied as the coin depositing device is described; however, the prevent invention is not limited to this example. For example, a checkout machine, arranged in a checkout lane of semi-self type, which is used in the settlement processing by the customer after the commodity registration processing is executed by the store clerk may be applied as a settlement apparatus. Further, a ticket vending machine (ticket machine) for issuing a meal ticket of a restaurant, a fare adjustment machine in a parking lot or a station, a vending machine and the like may also be applied as a settlement apparatus. The application destination of the coin depositing device may be an apparatus other than the settlement apparatus, and if the application destination of the coin depositing device is an apparatus accompanying depositing of coins or a coin other than money such as a coin for amusement, the type and the use thereof are not limited in particular.

Further, in the present embodiment, an example of depositing coin from the money placing section 70 to the coin depositing port 421 is described; however, the present invention is not limited to this use, but the coin may be deposited to the coin depositing port 421 directly. For example, after coin is placed on the money placing surface 71 of the money placing section 70, the coin on the money placing surface 71 may be picked up and deposited to the coin depositing port 421 as a use method of this arrangement. In the present embodiment, even in the use method described above, as the coin can be easily taken out from the money placing section 70, depositing of the coin to the coin depositing port 421 can be easily carried out.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope and framework of the invention.

## Claims

1. A coin depositing device, comprising:
a coin depositing port including a funnel-shaped inclined surface and a hole, arranged at the lowermost part of the inclined surface, through which a coin slid down along the inclined surface is deposited; and
a money placing section including a money placing surface connecting with an upper end of a part of the inclined surface and a guide wall arranged at an edge part of the money placing surface, wherein
the inclined surface includes a first inclined surface connecting with the money placing surface and a second inclined surface facing the first inclined surface across the hole, and a lower end of the first inclined surface is located at the bottom side of the hole farther than a lower end of the second inclined surface.

2. The coin depositing device according to claim 1, wherein
the money placing surface includes a dust drop hole on the surface thereof.

3. The coin depositing device according to claim 2, further including:
a dust reception section arranged at the rear side of the money placing surface to receive dust dropping from the dust drop hole.

4. The coin depositing device according to claim 2 or 3, wherein
the money placing surface includes thereon a sheet of a low friction material affixed on an area other than the area at which the dust drop hole is arranged.

5. The coin depositing device according to any one of claims 1 to 4 wherein
a corner portion for connecting the money placing surface and the guide wall is formed in a curved shape.

6. A coin depositing system, comprising:
a coin depositing port means including a funnel-shaped inclined surface and a hole, arranged at the lowermost part of the inclined surface, through which a coin slid down along the inclined surface is deposited; and
a money placing means including a money placing surface connecting with an upper end of a part of the inclined surface and a guide wall arranged at an edge part of the money placing surface, wherein
the inclined surface includes a first inclined surface connecting with the money placing surface and a second inclined surface facing the first inclined surface across the hole, and a lower end of the first inclined surface is located at the bottom side of the hole farther than a lower end of the second inclined surface.

7. The coin depositing system according to claim 6, wherein
the money placing surface includes a dust drop hole on the surface thereof.

8. The coin depositing system according to claim 7, further including:
a dust reception means arranged at the rear side of the money placing surface to receive dust dropping from the dust drop hole.

9. The coin depositing system according to claim 7 or 8, wherein
the money placing surface includes thereon a sheet of a low friction material affixed on an area other than the area at which the dust drop hole is arranged.

10. The coin depositing system according to any one of claims 6 to 9 wherein
a corner portion for connecting the money placing surface and the guide wall is formed in a curved shape.
